(19) Europäisches Patentamt
European Patent Office
Office européen des brevets

(11) **EP 3 026 908 A1**

(12) **EUROPEAN PATENT APPLICATION**

(43) Date of publication:
**01.06.2016 Bulletin 2016/22**

(51) Int Cl.:
**H04N 19/117** (2014.01)   **H04N 19/136** (2014.01)
**H04N 19/186** (2014.01)   **H04N 19/98** (2014.01)
**H04N 19/86** (2014.01)

(21) Application number: **14306892.2**

(22) Date of filing: **26.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Boitard, Ronan
35576 CESSON SEVIGNE (FR)**

• **Pouli, Tania
35576 CESSON SEVIGNE (FR)**
• **Mantiuk, Rafal
BANGOR, LL57 2DG (GB)**
• **Thoreau, Dominique
35576 CESSON SEVIGNE (FR)**

(74) Representative: **Huchet, Anne
Technicolor
1, rue Jeanne d'Arc
92443 Issy-les-Moulineaux Cedex (FR)**

(54) **Method and device for quantizing and de-quantizing a picture using scaling factors for chrominance based on luminance**

(57)    The present disclosure generally relates to a method and device for quantizing a picture comprising a luminance component and two color components representing the chrominance of the picture, the method is characterized in that it comprises adjusting, before quantizing, each color component of the picture according to a scaling factor defined from the luminance component of the picture.

**Fig. 1**

**Description**

**1. Field.**

The present disclosure generally relates to picture/video quantizing. Particularly, but not exclusively, the technical field of the present disclosure is related to quantizing a picture whose pixels values belong to a high-dynamic range.

**2. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the following, a picture contains one or several arrays of samples (pixel values) in a specific picture/video format which specifies all information relative to the pixel values of a picture (or a video) and all information which may be used by a display and/or any other device to visualize and/or decode a picture (or video) for example. A picture comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **n** values, where **n** is the number of components. Each value of a vector is represented with a number of bits which defines a maximal dynamic range of the pixel values.

The variation of light in a scene captured by an imaging device can vary greatly. For example, objects located in a shadow of the scene can appear very dark compared to an object illuminated by direct sunlight. The limited dynamic range and colour gamut provided by traditional Low-Dynamic-Range pictures often do not provide a sufficient range for accurate reproduction of the changes in luminance and colour within such scenes.

Low-Dynamic-Range pictures (LDR pictures) are pictures whose pixel values are represented with a number of bits, typically 8 or 10 bits per component. This limited representation does not allow correct rendering of small signal variations, in particular in dark and bright luminance ranges.

High dynamic range imaging (also referred to as HDR or HDRI) enables a greater dynamic range of luminance between light and dark areas of a scene compared to traditional LDR pictures. This is achieved in HDR imaging by extending the signal representation to a wider dynamic range in order to provide high signal accuracy across the entire range. In High-Dynamic-Range pictures (HDR pictures), component values of pixels are usually represented with a greater number of bits (for example from 16 bits to 64 bits) including in floating-point format (for example 32-bit or 16-bit for each component, namely float or half-float), the most popular format being openEXR half-float format (16-bit per RGB component, i.e. 48 bits per pixel) or in integers with a long representation, typically at least 16 bits. Such ranges correspond to the natural sensitivity of the human visual system. In this way HDR pictures more accurately represent the wide range of luminance found in real scenes thereby providing more realistic representations of the scene. High Dynamic Range imaging is becoming widely used in both the computer graphics and image processing communities.

Pictures, such as HDR pictures, represented by floating point values represent the physical quantities of the captured scene. However, usual image/video processing, such as encoding, is devised to process integer value.

Quantization is a lossy compression technique achieved by compressing a range of values to a single quantum value. Thus, quantizing a picture means obtaining integer values for each pixel of the picture according to specific quantization step sizes. De-quantizing a picture is the inverse process of quantizing a picture. Thus, de-quantizing a picture means obtaining floating point values for integer values relative to the pixels of the picture.

The integer valued representation of digital image/video is usually optimized for human observers, i.e. pictures are represented in a perceptual linear space before processed, e.g. encoded by an encoding/decoding scheme such as HEVC (Sullivan, G. J., Ohm, J.-R., Han, W.-J., & Wiegand, T. (2012). Overview of the High Efficiency Video Coding (HEVC) Standard. IEEE Transactions on Circuits and Systems for Video Technology, 22(12), 1649-1668).

Encoding data represented in a perceptual linear space removes information (visual noise) that would be invisible after decoding and optimizes the bit-depth at our disposal to minimize the visual loss of quantization. In LDR imagery, such an encoding is known as the gamma encoding. It was design for luminance ranging from 0.1 cd/m$^2$ to 100 cd/m$^2$.

For encoding data represented in a perceptual linear space, pictures represented using tri-stimulus representation such as XYZ or RGB (and represented with floating point values, 32 or 16 bits) are first converted to color difference representations.

For application such as picture/video compression, a color difference converting is traditionally used. In HDTV applications, such a conversion from a RGB representation to a YCbCr (Cb and Cr being the blue and red chroma) is defined in International Telecommunication Union. (1998). Parameter Values for the HDTV Standard for Production and International Programme Exchange. *In Recommendation ITU-R BT.709.* This recommendation also fixes the three primaries (Red, Green and Blue) that limit the colour gamut. As such a restriction on the colour gamut is unfit for HDR pictures alternative color difference converting has been proposed. For example the YDuDv which is based on the LogLuv encoding *(*Larson, G. W. (1998). LogLuv encoding for full-gamut, high-dynamic range images. Journal of Graphics Tools, 3(1), 15-31. Retrieved from http.,//dl.acm.org/citation.cfm?id=317261*).* This last conversion allows representing the full visible gamut for a wide range of luminance. This conversion has been design to be perceptually uniform in both the luminance and chrominance domain and HDR pictures encoded using color difference representations require less bit-depth for the chrominance channel than for the luminance channel. Different bit-depths are used to encode chrominance and luminance channels, however the bit-depth is fixed for all luminance levels although the required bit-depth can be different. For example, the human vision system distinguishes less different colors in low illumination.

In other word, the minimum required bit-depth before quantization artifacts appear is not the same at every luminance level. Consequently, when choosing the bit-depth, two alternatives exist: Taking the highest required bit-depth and hence oversampling chrominance where a lesser bit-depth would be enough. This solution would result in encoding much more data than required to decode a visually lossless result. The second alternative is taking less than the highest required bit-depth thus optimizing the amount of data encoded. However, this alternative would result in loss of visual quality for chrominance associated with luminance that requires a higher bit-depth than the chosen one.

The present disclosure has been devised with the foregoing in mind.

### 3. Summary.

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art with a method for quantizing a picture comprising a luminance component and two color components representing the chrominance of the picture. The method is characterized in that it comprises adjusting, before quantizing, each color component of the picture according to a scaling factor derived from the luminance component of the picture.

The method optimizes the amount of quantized data by scaling the chrominance channels of pictures according to the luminance component of the picture so as to remove visual noise at every luminance level. For application such as video compression, this would result in less data to encode without loss in visual quality.

According to another of its aspects, the disclosure relates to a method for de-quantizing a picture comprising a luminance component and two color components representing the chrominance of the picture. The method comprises adjusting each color component of the picture according to a scaling factor derived from the luminance component of the picture.

According to an embodiment, the scaling factor is derived from a version of the luminance component of the picture.

According to an embodiment, the value of each pixel of each color component is adjusted according to the scaling factor.

According to an embodiment, the value of some pixel of at least one color component is adjusted according to the scaling factor.

According to an embodiment, a scaling factor is defined for a pixel of the picture from the luminance value of said pixel.

According to an embodiment, a scaling factor is defined for a pixel of the picture according to the density of the chrominance values in the picture for a luminance value of said pixel.

According to an embodiment, a scaling factor is defined for the pixels of a set of pixels from a luminance value calculated from luminance values of said pixels.

According to an embodiment, the method for quantizing further comprises generating a bitstream comprising an information data indicating whether at least one color component of the picture has been adjusted according to a scaling factor.

According to an embodiment, the bitstream further comprises at least one scaling factor.

According to another of its aspects, the disclosure relates to a method for encoding a picture comprising a luminance component and two color components representing the chrominance of the picture. The method comprises quantizing the picture according to a above method for quantizing.

According to another of its aspects, the disclosure relates to a method for decoding a picture comprising a luminance component and two color components representing the chrominance of the picture. The method comprises de-quantizing the picture according to the above method for de-quantizing.

According to other of its aspects, the disclosure relates to a device comprising a processor configured for implementing the above methods, a computer program product comprising program code instructions to execute the steps of the above methods when this program is executed on a computer, a processor readable medium having stored therein instructions for causing a processor to perform at least the steps of the above methods, and a non-transitory storage medium carrying instructions of program code for executing steps of the above methods when said program is executed on a computing device.

The specific nature of the disclosure as well as other objects, advantages, features and uses of the disclosure will become evident from the following description of embodiments taken in conjunction with the accompanying drawings.

## 4. Brief Description of Drawings.

In the drawings, an embodiment of the present disclosure is illustrated. It shows:

- **Fig. 1** shows a block diagram of the steps of a method for quantizing a picture in accordance with an embodiment of the disclosure;
- **Fig. 2** shows a block diagram of the steps of a method for de-quantizing a picture in accordance with an embodiment of the disclosure;

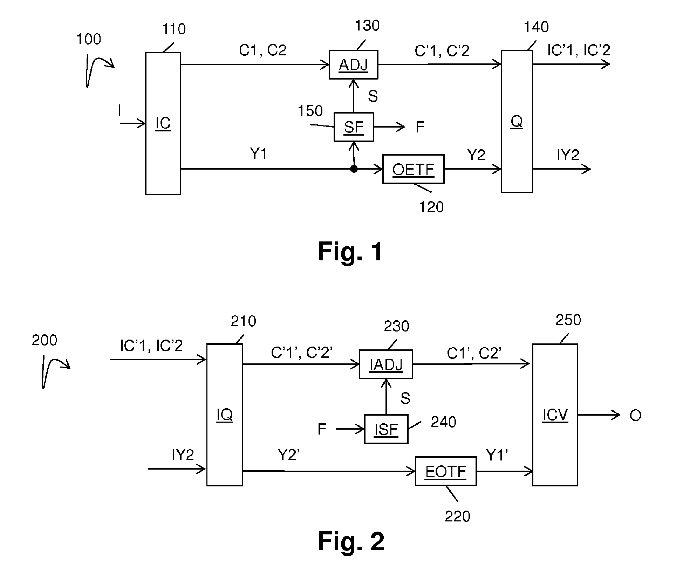

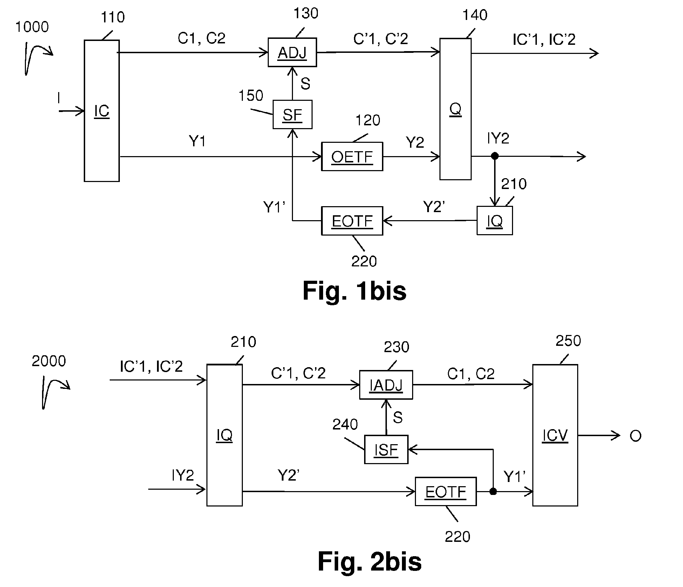

- **Fig. 1 bis** shows a block diagram of the steps of a variant of method of **Fig. 1;**
- **Fig. 2bis** shows a block diagram of the steps of a variant of method of **Fig. 2;**

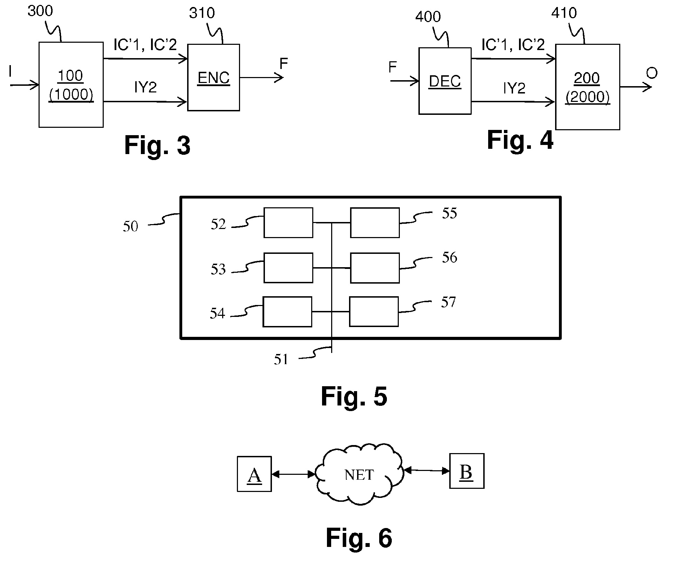

- **Fig. 3** shows a block diagram of the steps of a method for encoding a picture in accordance with an embodiment of the disclosure;
- **Fig. 4** shows a block diagram of the steps of a method for decoding a picture in accordance with an embodiment of the disclosure;
- **Fig. 5** shows an example of an architecture of a device in accordance with an embodiment of the disclosure; and
- **Fig. 6** shows two remote devices communicating over a communication network in accordance with an embodiment of the disclosure;

Similar or same elements are referenced with the same reference numbers.

## 6. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

Adjusting a data according to a value means multiplying said data by said value or equivalently dividing such data by the inverse of said value.

The disclosure is described for quantizing/de-quantizing or encoding/decoding a picture but extends to the quantizing/de-quantizing or encoding/decoding of a sequence of pictures (video) because each picture of the sequence is sequentially quantized/de-quantized or encoded/decoded as described below.

Generally speaking, the disclosure aims at scaling non-uniformly chrominance channels of a picture according to luminance levels before quantizing the components of said picture in order to fit the minimum bit-depth required at each luminance level to the maximum bit-depth required, for example, to encode the chrominance channel.

**Fig. 1** shows a block diagram 100 of the steps of a method for quantizing a picture in accordance with an embodiment of the disclosure.

In step 110, a module IC obtains a luminance component Y1 and two color components C1 and C2 of a picture **I** to be quantized. The components Y1, C1 and C2 are usually represented in a floating-point format and the color components C1 and C2 represent the chrominance of the picture I.

The module IC is configured for obtaining the components Y1, C1, C2 represented in a specific output color space.

The module IC may thus obtain directly those components or may convert components, obtained from a source, when they are represented in an input color space that is different of the output color space.

For example, a typical 8-bit integer converter may be used for converting the components (Y1, C1, C2) represented in the input RGB color space (with BT.709 primaries) to the output CIEXYZ color space with a 8-bit dynamic range. The well-known conversion equations are given by:

$$x = (422 * r + 366 * g + 185 * b + 128) >> 10;$$

$$y = (218 * r + 732 * g + 74 * b + 128) >> 10;$$

$$z = (20 * r + 122 * g + 973 * b + 128) >> 10;$$

with (r,g,b) are triplets of RGB color values, (x,y,z) are triplets of CIEXYZ color values and with 10 bits coefficients accuracy for conversion accuracy preservation's sake.

According to another example, the CIEXYZ is the input color space and the CIELab1976 is the output color space. The triplets of CIEXYZ color values (x, y, z) are then converted to triplets of CIELab1976 color values by the following equations:

$$Y = 116f(y/Yn) - 16$$

$$X = 500 \left( f\left(\frac{x}{Xn}\right) - f(\frac{y}{Yn}) \right)$$

$$Z = F3(z,y) = 200 \left( f\left(\frac{y}{Yn}\right) - f(\frac{z}{Zn}) \right)$$

where $(X_n, Y_n, Z_n)$ are triplets representing the environment used to visualize the color data, and **f** is mainly a gamma function with an exponent equal to 1/3, i.e:

$$f(r) = r^{1/3} \qquad if \ r > \left(\frac{6}{29}\right)^3$$

$$f(r) = \frac{1}{3} * \left(\frac{29}{6}\right)^2 * r + \frac{4}{29}$$

*otherwise*

According to another example, the CIEXYZ is the input color space and the YDzDx color space (*"WD SMPTE Standard: YDzDx Color-Difference Encoding for XYZ integer signals"*, version 1.06 of 2014-03-03*)* is the output color space.

The triplets of CIEXYZ color values (x, y, z) are then converted to triplets of YDzDx color values by the following equations:

$$Y = y$$

$$Dx = \frac{x - c_2 y}{2.0}$$

$$Sz = \frac{c_1 z - y}{2.0}$$

$$c_1 = \frac{2763}{2800}$$

$$c_2 = \frac{2741}{2763}$$

Note that the disclosure is not limited to any input and/or output color space.

According to a variant of the method, in step 120, a module OETF obtains a component Y2 by applying an Optical-Electro Transfer Function (OETF) to the component Y1.

Generally speaking, an Opto-Electrical Transfer Function (OETF), also abusively referred as "gamma encoding", may be applied to a signal either during its capture, the module is then usually embedded in the capture means, or during a content production which enables coding the physical linear-light signal (input of the camera).

Gamma encoding was developed originally to compensate for the input/output characteristics of cathode ray tube (CRT) displays. More precisely, a cathode ray tube (CRT) converts a video signal to light in a nonlinear way, because the electron gun's intensity (brightness) is nonlinear. The light intensity *I* is basically related to the source voltage $V_S$ according to

$$I \propto V_S{}^\gamma$$

where $\gamma$ usually belongs to the range [1.8;2.6].

To compensate for this effect, an inverse transfer function (OETF, also called gamma encoding or gamma correction) is then applied to the signal so that the end-to-end response is nigh linear. In other words, the signal is deliberately distorted so that, after it has been distorted again by the CRT display, the viewer sees the correct brightness.

A basic example of OETF is:

$$V_c \propto V_S{}^{1/\gamma}$$

where $V_C$ is the corrected voltage and $V_S$ is the source voltage, for example from an image sensor that converts photocharge linearly to a voltage. In our CRT example $1/\gamma$ is 1/2.2 or 0.45.

Multiple OETF have been standardized for CRT displays (Recommendation ITU-R BT.709-5, Parameter values for the HDTV* standards for production and international programme exchange, April 2004, and Recommendation ITU-R BT.1361, Worldwide unified colorimetry and related characteristics of future television and imaging system, February 1998) or for other reference displays (SMPTE "FCD SMPTE Standard High Dynamic Range Electro-Optical Transfer Function of Mastering Reference Displays, SMPTE ST2084:201X, Version 1.24 --- of 2014-06-18").

Gamma encoding is required to compensate for properties of human vision, hence to maximize the use of the bits or bandwidth relative to how humans perceive light and color. Human vision, under common illumination conditions (not pitch black nor blindingly bright), follows an approximate gamma or power function or Log function (power is < 1 here). If video are not gamma encoded, they allocate too many bits or too much bandwidth to highlights that humans cannot differentiate, and too few bits/bandwidth to shadow values that humans are sensitive to and would require more bits/bandwidth to maintain the same visual quality.

In step 130, a module ADJ obtains the component C'1, respectively C'2, by adjusting the color component C1, respectively C2, according to a scaling factor S derived from the luminance component Y1. In step 140, a module Q obtains an integer version IY2, respectively IC'1 and IC'2 of the components Y2 (or Y1), respectively C'1 and C'2 by quantizing the components Y2 (or Y1), C'1 and C'2. More precisely, the module Q obtains the triplets of integer values represented in a targeted maximal dynamic range, typically 8 bits per component by quantizing the triplets of the components Y2 (or Y1), respectively C'1 and C'2.

**Fig. 2** shows a block diagram 200 of the steps of a method for de-quantizing a picture in accordance with an embodiment of the disclosure.

In step 210, a module IQ obtains a component Y2', respectively C'1' and C'2' by de-quantizing the components IY2, IC'1 and IC'2. More precisely, the module IQ obtains the triplets of values of the components Y2', respectively C'1' and C'2' by de-quantizing the triplets of the components IY2, respectively IC'1 and IC'2.

According to a variant of the method, in step 220, a module EOTF obtains a component Y1' by applying an Electro-Optic Transfer Function (EOTF) to the component Y2'.

For example, the component Y1' is given by the following equation as described in SMPTE "FCD SMPTE Standard High Dynamic Range Electro-Optical Transfer Function of Mastering Reference Displays, SMPTE ST2084:201X, Version 1.24 --- of 2014-06-18":

$$L = a(max[(V + b), 0])^\gamma$$

$$a = \left(L_w^{1/\gamma} - L_B^{1/\gamma}\right)^\gamma$$

$$b = \frac{L_B^{1/\gamma}}{L_w^{1/\gamma} - L_B^{1/\gamma}}$$

where L is a screen luminance in cd/m2, $L_w$ is a screen luminance for white, $L_B$ is a screen luminance for black, V is the signal level of the component Y2' (normalized, black at V=0, to white V=1), $\gamma$ is an exponent of power function, typically $\gamma = 2.40^4$, **a** is a variable for user gain (legacy "contrast" control), and **b** is a variable for user block level shift (legacy "brightness" control).

In step 230, a module IADJ obtains the component C1', respectively C2', by ajusting the color component C'1', respectively C'2', according to a scaling factor S derived from the luminance component Y1.

In step 250, a module ICV obtains an output picture O by combining together the luminance component Y1' and the two color components C1' and C2'.

According to an embodiment of the steps 130 and/or 230, the value of each pixel of each color component is adjusted according to the scaling factor S.

According to an embodiment of the steps 130 and/or 230, the value of some pixel of at least one color component is adjusted according to the scaling factor S.

For example, the pixels of the color component C1 or the pixels of the color component C2 or only some pixels of a color component or only some pixels of each color component C1 and C2 are adjusted according to the scaling factor S. In steps 150 and 240a module SF and ISF obtain the scaling factor S.

According to an embodiment of the steps 150 or 240, illustrated in **Figs. 1** and **Fig. 2,** the scaling factor S is derived directly from the luminance component Y1 of the picture **I**.

According to a variant of the embodiment of the step 150, illustrated in **Fig. 1 bis,** the scaling factor S is derived from a version of the component Y1 of the picture **I.** Said version of the luminance component Y1 is, for example, the component Y1' which is obtained by applying successively the modules IQ (step 210) and EOTF (step 220) to the component IY2.

This variant is advantageous because it avoids transmitting the scaling factor S to a de-quantizer that is then able to calculate the scaling factor S from said version Y1' of the luminance component Y1 of the picture I, as illustrated in **Fig. 2bis.**

According to an embodiment of the step 150, an information data indicating whether at least one color component of the picture has been adjusted according to a scaling factor ia added in a bitstream F.

According to an embodiment of the step 150, illustrated in **Fig. 1,** the scaling factor S is added to a bitstream F.

According to an embodiment of the step 240, illustrated in **Fig. 2,** the scaling factor S is obtained from a bitstream F.According to an embodiment of the step 150, a scaling factor S is derived for a pixel **p** of the picture to be quantized from a luminance value of said pixel **p.** As explained before, such a luminance value of a pixel **p** is either the luminance value obtained from the luminance component Y1 or from the component Y1'.

According to a variant of this last embodiment, a scaling factor S is defined by:

$$S = \frac{2^{n(p)}}{2^m} \qquad (1)$$

with **m** the bit-depth of the color components C1 and C2 and **n(p)** the bit-depth of the scaled components C'1 and C'2 given, for example by:

If (0.05 < Lw(p) < 5000) then n(p) = INT(0.4342log(Lw(p)) + 7.3023)
else if (Lw(p) $\leq$ 0.05) n = 6
else n(p) = 11.
where Lw(p) is a luminance value of a pixel **p** of the component Y1 (or Y1').

The disclosure is not limited to a specific method for obtaining the bit-depth **n(p)** from the luminance value Lw(p) of the pixel **p.**

According to an embodiment of the step 150, a scaling factor S is defined for a pixel **p** of the picture **I** to be quantized according to the density of the chrominance values in the picture for a luminance value of said pixel **p.** A density value of a specific chrominance value is the number of occurrences of said chrominance value in the picture to be quantized for a specific luminance value.

According to an embodiment of the step 150, a scaling factor S is defined for the pixels of a set of pixels from a luminance value calculated from luminance values of said pixels.

For example, a set of pixels gathers the pixels of a block, a slice, a Coding Unit or Transform Unit as defined in HEVC, a Group of Pictures (GOP) or any other part of a picture.

A luminance value may be calculated from the luminance values of multiple pixels by calculating the average, minimum, maximum, median or a n-percentile (e.g. 90% of the maximal luminance value for example) of the luminance values of those pixels. **Fig. 3** shows a block diagram of the steps of a method for encoding a picture in accordance with an embodiment of the disclosure.

In step 300, the luminance component IY' and two color components IC'1 and IC'2 are obtained by applying the method 100 as described in relation with **Fig. 1** or the method 1000 as described in relation with **Fig. 1bis** to a picture **I** to be quantized.

In step 310, an encoder ENC encodes the luminance component IY' and the color components IC'1 and IC'2.

The encoder ENC may conforms to any traditional encoding/decoding schemes such as JPEG2000 (ISO standard ISO/IEC 15444) for still pictures or H.264/AVC (Advanced video coding for generic audiovisual Services", SERIES H: AUDIOVISUAL AND MULTIMEDIA SYSTEMS, Recommendation ITU-T H.264, Telecommunication Standardization Sector of ITU, February 2014,) or HEVC ("High Efficiency Video Coding", SERIES H: AUDIOVISUAL AND MULTIMEDIA SYSTEMS, Recommendation ITU-T H.265, Telecommunication Standardization Sector of ITU, April 2013)) for sequences of pictures.

According to an embodiment, the encoder ENC generates a bitstream F comprising the encoded components IY', IC'1 and IC'2 and an information data indicating if each encoded color component has been adjusted according to a scaling factor S.

According to a variant, a bitstream F is generated and further comprises at least one scaling factor.

**Fig. 4** shows a block diagram of the steps of a method for decoding a picture in accordance with an embodiment of the disclosure.

In step 400, a decoder DEC obtains the decoded luminance component IY' and the two decoded color components IC'1 and IC'2 by decoding, at least partially, a bitstream F.

In step 410, the output picture O is obtained by applying the method 200 as described in relation with **Fig. 2** to the decoded luminance component IY' and the decoded color components IC'1 and IC'2.

The decoders DEC is configured to decode data which have been encoded by the encoder ENC.

The encoder ENC (and decoder DEC) is not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoder ENC (and decoder DEC) is not limited to a specific encoder which may be, for example, an image/video coder with loss like JPEG, JPEG2000, MPEG2, h264/AVC or HEVC.

When the method 1000 is used (step 300), the version of the component Y1 of the picture I (step 150) is obtained by encoding the component IY2, and by applying successively the decoder DEC, the modules IQ (step 210) and EOTF (step 220) to the encoded component IY2.

On **Fig. 1-4,** the modules are functional units, which may or not be in relation with distinguishable physical units. For example, these modules or some of them may be brought together in an unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

**Fig. 5** represents an exemplary architecture of a device 50 which may be configured to implement a method described in relation with **Fig. 1-4.**

Device 50 comprises following elements that are linked together by a data and address bus 51:

- a microprocessor 52 (or CPU), which is, for example, a DSP (or Digital Signal Processor);
- a ROM (or Read Only Memory) 53;
- a RAM (or Random Access Memory) 54;
- an I/O interface 55 for reception of data to transmit, from an application; and
- a battery 56

According to a variant, the battery 56 is external to the device. Each of these elements of **Fig. 5** is well-known by those skilled in the art and won't be disclosed further. In each of mentioned memory, the word « register » used in the specification can correspond to area of small capacity (some bits) or to very large area (e.g. a whole program or large amount of received or decoded data). ROM 53 comprises at least a program and parameters. Algorithm of the methods according to the disclosure is stored in the ROM 53. When switched on, the CPU 52 uploads the program in the RAM and executes the corresponding instructions.

RAM 54 comprises, in a register, the program executed by the CPU 52 and uploaded after switch on of the device 50, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of quantizing or quantizer or encoding or encoder, the picture I is obtained from a source. For example, the source belongs to a set comprising:

- a local memory (53 or 54), e.g. a video memory or a RAM (or Random Access Memory), a flash memory, a ROM (or Read Only Memory), a hard disk ;
- a storage interface (55), e.g. an interface with a mass storage, a RAM, a flash memory, a ROM, an optical disc or a magnetic support;
- a communication interface (57), e.g. a wireline interface (for example a bus interface, a wide area network interface, a local area network interface) or a wireless interface (such as a IEEE 802.11 interface or a Bluetooth® interface); and
- an picture capturing circuit (e.g. a sensor such as, for example, a CCD (or Charge-Coupled Device) or CMOS (or Complementary Metal-Oxide-Semiconductor)).

According to different embodiments of the de-quantizing or de-quantizer or decoding or decoder, the output picture O is sent to a destination; specifically, the destination belongs to a set comprising:

- a local memory (53 or 54), e.g. a video memory or a RAM, a flash memory, a hard disk ;
- a storage interface (55), e.g. an interface with a mass storage, a RAM, a flash memory, a ROM, an optical disc or a magnetic support;
- a communication interface (55), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different embodiments of quantizing or quantitzer or encoding or encoder, the bitstream F is sent to a destination. As an example, the bitstream F is stored in a local or remote memory, e.g. a video memory (54) or a RAM (54), a hard disk (53). In a variant, the bitstream F is sent to a storage interface (55), e.g. an interface with a mass storage, a flash memory, ROM, an optical disc or a magnetic support and/or transmitted over a communication interface (55), e.g. an interface to a point to point link, a communication bus, a point to multipoint link or a broadcast network.

According to different embodiments of de-quantizing or de-quantizer or decoding or decoder, the bitstream F is obtained from a source. Exemplarily, the bitstream is read from a local memory, e.g. a video memory (54), a RAM (54), a ROM (53), a flash memory (53) or a hard disk (53). In a variant, the bitstream is received from a storage interface (55), e.g. an interface with a mass storage, a RAM, a ROM, a flash memory, an optical disc or a magnetic support and/or received from a communication interface (55), e.g. an interface to a point to point link, a bus, a point to multipoint link or a broadcast network.

According to different embodiments, device 50 being configured to implement an quantizing method described in relation with **Fig. 1** and/or to implement a de-quantizing method described in relation with **Fig. 2** and/or to implement a de-quantizing method described in relation with **Fig. 3** and/or to implement a decoding method described in relation with **Fig. 4,** belongs to a set comprising:

- a mobile device ;
- a communication device ;
- a game device ;
- a tablet (or tablet computer) ;
- a laptop ;
- a still picture camera;
- a video camera ;
- an encoding chip;
- a still picture server; and
- a video server (e.g. a broadcast server, a video-on-demand server or a web server).

According to an embodiment illustrated in **Fig. 6,** in a transmission context between two remote devices A and B over a communication network NET, the device A comprises means which are configured to implement a method for quantizing a picture as described in relation with the **Fig. 1** and/or a method for encoding a picture as described in relation with **Fig. 3,** and the device B comprises means which are configured to implement a method for de-quantizing as described in relation with **Fig. 2** and/or a method for decoding a picture as described in relation with **Fig. 4.**

According to a variant of the disclosure, the network is a broadcast network, adapted to broadcast still pictures or video pictures from device A to decoding devices including the device B.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for quantizing a picture comprising a luminance component and two color components representing the chrominance of the picture, the method is **characterized in that** it comprises adjusting, before quantizing, each color component of the picture according to a scaling factor derived from the luminance component of the picture.

2. A method for de-quantizing a picture comprising a luminance component and two color components representing the chrominance of the picture, the method is **characterized in that** it comprises adjusting each color component of the picture according to a scaling factor derived from the luminance component of the picture.

3. The method of the claim 1 or 2, wherein the scaling factor is derived from a version of the luminance component of the picture.

4. The method of any preceding claim, wherein the value of each pixel of each color component is adjusted according to the scaling factor.

5. The method of one of the claims 1-3, wherein the value of some pixel of at least one color component is adjusted according to the scaling factor.

6. The method of any preceding claim, wherein a scaling factor is defined for a pixel of the picture from the luminance value of said pixel.

7. The method of one of the claims 1-5, wherein a scaling factor is defined for a pixel of the picture according to the density of the chrominance values in the picture for a luminance value of said pixel.

8. The method of one of the claims 1-5, wherein a scaling factor is defined for the pixels of a set of pixels from a luminance value calculated from luminance values of said pixels.

9. The method of one of the claims 1, 3-8, wherein it further comprises generating a bitstream comprising an information data indicating whether at least one color component of the picture has been adjusted according to a scaling factor.

10. The method of claim 9, wherein the bitstream further comprises at least one scaling factor.

11. A method for encoding a picture comprising a luminance component and two color components representing the chrominance of the picture, the method is **characterized in that** it comprises quantizing the picture according to a method of the claim 1 before encoding.

12. A method for decoding a picture comprising a luminance component and two color components representing the chrominance of the picture, the method is **characterized in that** it comprises de-quantizing the picture according to a method of the claim 2 after decoding.

13. A device for quantizing a picture comprising a luminance component and two color components representing the chrominance of the picture, the device comprising a processor configured to adjust, before quantizing, each color component of the picture according to a scaling factor defined from a luminance component of the picture.

14. A device for de-quantizing a picture comprising a luminance component and two color components representing the chrominance of the picture, the device comprising a processor configured to adjust each color component of the picture according to a scaling factor defined from a luminance component of the picture.

15. A computer program product comprising program code instructions to execute the steps of the method of one of the claims 1-10 when this program is executed on a computer.

16. Non-transitory storage medium carrying instructions of program code for executing steps of the method of one of claims 1-10, when said program is executed on a computing device.

**Fig. 1**

**Fig. 2**

**Fig. 1bis**

**Fig. 2bis**

Fig. 3

Fig. 4

Fig. 5

Fig. 6

Europäisches
Patentamt

European
Patent Office

Office européen
des brevets

# EUROPEAN SEARCH REPORT

Application Number

EP 14 30 6892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXIS MICHAEL TOURAPIS ET AL: "Report on the XYZ/HDR Exploratory Experiment 6 (EE6): Color Space Conversion for XYZ/HDR Video Delivery", 109. MPEG MEETING; 7-7-2014 - 11-7-2014; SAPPORO; (MOTION PICTURE EXPERT GROUP OR ISO/IEC JTC1/SC29/WG11),, no. m34169, 30 June 2014 (2014-06-30), XP030062542, | 1-6,8, 11-16 | INV. H04N19/117 H04N19/136 H04N19/186 H04N19/98 H04N19/86 |
| Y | * page 6, line 1 - page 7, line 5 * * table 3 * ----- | 7,9,10 | |
| Y | US 2008/298469 A1 (LIU SHIZHONG [US] ET AL) 4 December 2008 (2008-12-04) * paragraph [0059] - paragraph [0060] * * tables 1,2 * ----- | 7,9,10 | |
| A | US 2011/316973 A1 (MILLER J SCOTT [US] ET AL) 29 December 2011 (2011-12-29) * paragraph [0068] - paragraph [0079] * ----- | 1-16 | |
| A | US 2014/301438 A1 (KIM WOO-SHIK [US] ET AL) 9 October 2014 (2014-10-09) * paragraph [0087] - paragraph [0092] * ----- | 1-16 | TECHNICAL FIELDS SEARCHED (IPC) H04N |
| A | US 2010/067579 A1 (BANDOH YUKIHIRO [JP] ET AL) 18 March 2010 (2010-03-18) * figure 8 * ----- | 1-16 | |

The present search report has been drawn up for all claims

| Place of search | Date of completion of the search | Examiner |
|---|---|---|
| Munich | 28 May 2015 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6892

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2015

| Patent document cited in search report | | Publication date | Patent family member(s) | | Publication date |
|---|---|---|---|---|---|
| US 2008298469 | A1 | 04-12-2008 | CN | 101682764 A | 24-03-2010 |
| | | | EP | 2015582 A1 | 14-01-2009 |
| | | | JP | 5296060 B2 | 25-09-2013 |
| | | | JP | 2010529748 A | 26-08-2010 |
| | | | JP | 2013042509 A | 28-02-2013 |
| | | | KR | 20100017973 A | 16-02-2010 |
| | | | TW | 200913722 A | 16-03-2009 |
| | | | US | 2008298469 A1 | 04-12-2008 |
| | | | WO | 2008150818 A2 | 11-12-2008 |
| US 2011316973 | A1 | 29-12-2011 | CN | 102349290 A | 08-02-2012 |
| | | | CN | 104486605 A | 01-04-2015 |
| | | | EP | 2406943 A2 | 18-01-2012 |
| | | | JP | 5436584 B2 | 05-03-2014 |
| | | | JP | 2012520050 A | 30-08-2012 |
| | | | JP | 2014090418 A | 15-05-2014 |
| | | | KR | 20110126133 A | 22-11-2011 |
| | | | KR | 20130008085 A | 21-01-2013 |
| | | | US | 2011316973 A1 | 29-12-2011 |
| | | | WO | 2010104624 A2 | 16-09-2010 |
| US 2014301438 | A1 | 09-10-2014 | TW | 201505421 A | 01-02-2015 |
| | | | US | 2014301438 A1 | 09-10-2014 |
| | | | WO | 2014168812 A1 | 16-10-2014 |
| US 2010067579 | A1 | 18-03-2010 | BR | PI0719239 A2 | 07-10-2014 |
| | | | CA | 2665182 A1 | 17-04-2008 |
| | | | CN | 101523923 A | 02-09-2009 |
| | | | CN | 103188492 A | 03-07-2013 |
| | | | EP | 2066134 A1 | 03-06-2009 |
| | | | EP | 2448269 A1 | 02-05-2012 |
| | | | EP | 2448270 A1 | 02-05-2012 |
| | | | JP | 5106408 B2 | 26-12-2012 |
| | | | KR | 20090057297 A | 04-06-2009 |
| | | | RU | 2009111880 A | 27-10-2010 |
| | | | TW | 200824467 A | 01-06-2008 |
| | | | US | 2010067579 A1 | 18-03-2010 |
| | | | WO | 2008044637 A1 | 17-04-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SULLIVAN, G. J. ; OHM, J.-R. ; HAN, W.-J. ; WIEGAND, T.** Overview of the High Efficiency Video Coding (HEVC) Standard. *IEEE Transactions on Circuits and Systems for Video Technology,* 2012, vol. 22 (12), 1649-1668
- Parameter Values for the HDTV Standard for Production and International Programme Exchange. *International Telecommunication Union,* 1998
- **LARSON, G. W.** LogLuv encoding for full-gamut, high-dynamic range images. *Journal of Graphics Tools,* 1998, vol. 3 (1), 15-31, http.,//dl.acm.org/citation.cfm?id=317261
- *WD SMPTE Standard: YDzDx Color-Difference Encoding for XYZ integer signals,* 03 March 2014

- Recommendation ITU-R BT.709-5, Parameter values for the HDTV* standards for production and international programme exchange, April 2004, and Recommendation ITU-R BT.1361. *Worldwide unified colorimetry and related characteristics of future television and imaging system,* February 1998
- SMPTE "FCD SMPTE Standard High Dynamic Range Electro-Optical Transfer Function of Mastering Reference Displays. *SMPTE ST2084:201X,* 18 June 2014
- Advanced video coding for generic audiovisual Services. *SERIES H: AUDIOVISUAL AND MULTIMEDIA SYSTEMS, Recommendation ITU-T H.264, Telecommunication Standardization Sector of ITU,* February 2014
- High Efficiency Video Coding. *SERIES H: AUDIOVISUAL AND MULTIMEDIA SYSTEMS, Recommendation ITU-T H.265, Telecommunication Standardization Sector of ITU,* April 2013